# EUROPÄISCHE PATENTSCHRIFT

(11) **EP 2 308 744 B1**
(45) Veröffentlichungstag und Bekanntmachung des Hinweises auf die Patenterteilung: **15.03.2017**
(21) Anmeldenummer: 10007705.6
(22) Anmeldetag: 24.07.2010
(51) Int. Cl.: B62D 21/02, B62D 21/03, B62D 21/12

(54) **NUTZFAHRZEUG MIT EINEM FAHRGESTELLRAHMEN MIT LAGEEINSTELLEBAREM UND GETEILTEN QUERTRÄGER**
DUTY VEHICLE WITH A FRAME CHASSIS EXHIBITING A POSITION ADJUSTABLE AND DIVIDED TRANSVERSE MEMBER
VÉHICULE UTILITAIRE AVEC CADRE DE CHÂSSIS DOTÉ D'UN MEMBRE TRANSVERSAL AJUSTABLE EN POSITION ET SCINDÉ

(30) Priorität: 06.10.2009 DE 102009048347
(43) Veröffentlichungstag der Anmeldung: 13.04.2011
(73) Patentinhaber: MAN Truck & Bus AG, 80995 München (DE); Georg Fischer Automobilguss GmbH, 78224 Singen (DE)
(72) Erfinder: Hornsmann, Martin, 81541 München (DE); Rossol, Martin, 80997 München (DE); Seidinger, Karl, 78269 Volkertshausen (DE); Melai, Giuseppe, 78239 Worblingen (DE)
(74) Vertreter: Liebl, Thomas

(56) Entgegenhaltungen:
- EP-A1- 2 246 241
- EP-A2- 2 246 240
- DE-A1- 19 643 001
- DE-A1-102006 041 664
- DE-A1-102009 016 935
- JP-A- 2004 291 710
- JP-A- 2009 120 004
- JP-A- 2009 248 583

## Beschreibung

Die Erfindung bezieht sich auf ein Nutzfahrzeug mit einem Fahrgestellrahmen, zwischen dessen Längsträgern quer zur Fahrtrichtung wenigstens ein Querträger lösbar befestigt ist.

Die gattungsgemäße EP 2 246 240 A2 beschreibt einen Fahrgestellrahmen für ein Fahrzeug mit einem dreiteiligen Querträger bestehend aus einem Querträgermittelteil, an dessen Enden Flanschplatten angeformt sind, und zwei Trägerkonsolen, die an einem Längsträger befestigbar sind.

Aus der DE 10 2006 060 405 ist eine Rahmenanordnung für ein Fahrzeug, insbesondere ein Nutzfahrzeug bekannt, die ein erstes Rahmenelement umfasst, welches sich im Wesentlichen in Fahrzeuglängsrichtung erstreckt und ein Befestigungselement, das an dem ersten Rahmenelement angeordnet ist und zur Lagerung eines Achslenkers ausgebildet ist. Ein zweites Rahmenelement verläuft im Wesentlichen rechtwinklig zum ersten Rahmenelement. Das zweite Rahmenelement ist dabei derart an dem Befestigungselement befestigt, dass das zweite Rahmenelement das Befestigungselement zumindest bereichsweise umgreift. Die jeweiligen Rahmenelemente und das Befestigungselement sind miteinander mittels Schrauben oder Nieten verbunden. Es erweist sich jedoch als nachteilig, dass im Falle der Montage oder Demontage eines zweiten Rahmenelements (auch Querträger genannt) nach Lösen der Schraub- oder Nietverbindung die ersten Rahmenelemente (auch Rahmenlängsträger genannt) zur Entnahme des Querträgers aufgespreizt werden müssen.

Es ist daher die Aufgabe der Erfindung, einen Querträger zu schaffen, der bzgl. des Montage- oder Demontageaufwands in Bezug zum Fahrgestellrahmen verbessert ist.

Diese Aufgabe wird erfindungsgemäß durch die Merkmale des Patentanspruchs 1 gelöst.

Im gegenwärtigen Stand der Technik sind Längsträger bekannt, die im Bezug zur Fahrzeuglängsachse einen senkrechten Steg und zwei mit diesem verbundene waagrechte Schultern umfassen. Aus dem Steg und den in der Regel rechtwinklig dazu angeordneten Schultern bildet sich ein U-förmiges Profil des Längsträgers in das bei der Montage des Querträgers der Querträger mit einem Anschlussflansch eingreift. Der Anschlussflansch eines Querträgers kann mit dem Rahmenlängsträger verschweißt, verschraubt oder vernietet sein. Die Öffnung des U-förmigen Längsträgers kann jedoch auch mit ihrem Rücken am Anschlussflansch des Querträgerträgers anliegen, sodass die Schultern des Längsträgers in axialer Richtung vom Querträger weg weisen. Im Weiteren wird jedoch von einem Querträger ausgegangen, der axial in die Öffnung des U's des Längsträgers hineinragt. Erfindungsgemäß besteht der Querträger aus zwei Teilen, die axial miteinander verbunden sind. Zur Verbindung der Teile dienen Flansche, die im Stoßbereich der Querträgerteile scheibenförmig am Querträger angeordnet sind und im verbundenen Zustand parallel aneinander anliegen. Die Flansche können anstatt in Scheibenform, auch in einer beliebigen anderen Form z.B. rund oder rechteckig ausgebildet sein. Die aneinander anliegenden Flansche der Querträgerteile sind mittels Schrauben oder Nieten miteinander verbindbar. Im Stoßbereich sind die Flansche relativ zur Längsachse des Längsträgers schräg angeordnet. Die parallel aneinander anliegenden Flansche können dabei in Bezug zur Fahrzeuglängsachse gewinkelt angeordnet sein. Die Flansche der Längsträgerteile können aber auch in Bezug zur Längsachse des Querträgers gewinkelt positioniert sein. Zur Montage oder Demontage des Querträgers vom Rahmenlängsträger werden die Verbindungen zwischen den Flanschen sowie die Verbindung zwischen dem Anschlussflansch und dem Längsträger gelöst. Die zueinander gehörigen Querträgerteile sind in Bezug zur Fahrtrichtung entlang dem Rahmenlängsträger gegeneinander verschiebbar. Auf diese Weise sind die Querträgerteile zu Montagezwecken in eine Position bringbar, in der die Querträgerteile miteinander fluchten. Zur Demontage werden die fluchtend einander gegenüberstehenden Querträgerteile in entgegengesetzter Richtung auseinander geschoben. Je nach Ausformung des Fahrzeuglängsträgers und nach Schrägstellung der parallel aneinander anliegenden Flansche sind die beiden Querträgerteile in Bezug zur Fahrzeuglängsachse auch senkrecht zueinander verschiebbar.

Nach einer anderen Ausführungsform der Erfindung sind an den jeweils außen liegenden Querträgerteilen miteinander korrespondierende Lagerböcke angeordnet, die der Befestigung von Lenkungselementen dienen. An den Lagerböcken sind Lenker in beliebiger Form (z.B. Längslenker, Dreieckslenker, X-Lenker oder auch Schräglenker) befestigbar.

In einer weiteren Ausführungsform der Erfindung ist der Querträgerteil im Übergangsbereich zu einem Anschlussflansch radial erweitert. Der Anschlussflansch dient dabei der Befestigung des Querträgerteils am Längsträger. Die radiale Erweiterung dient z. B. der Versteifung des Querträgerteils im Bereich der Befestigung am Längsträger. Der Übergangsbereich kann z. B. die Form eines Kegelstumpfes oder eines Zylinders annehmen. Die vorstehende Aufzählung ist dabei nur beispielhaft gedacht.

In einer zusätzlichen Ausführungsform der Erfindung sind an den jeweiligen Übergangsbereichen miteinander korrespondierende Lagerböcke angeordnet, die der Befestigung von Lenkungselementen oder anderen Aggregaten dienen.

Weitere vorteilhafte Ausgestaltungen und zweckmäßige Fortbildungen des erfindungsgemäßen Nutzfahrzeugs sind aus den nachstehenden Beispielsbeschreibungen anhand der Zeichnungen näher entnehmbar.

Hierbei zeigen:
- Fig. 1: den erfindungsgemäßen Querträger verbaut mit angeschlossenem Dreieckslenker,
- Fig. 2: die gegeneinander verschobenen Querträgerhälften,
- Fig. 3: aus der Draufsicht die miteinander verbundenen Querträgerhälften und
- Fig. 4: den Querträger entsprechend Fig. 3 seitlich geschnitten.

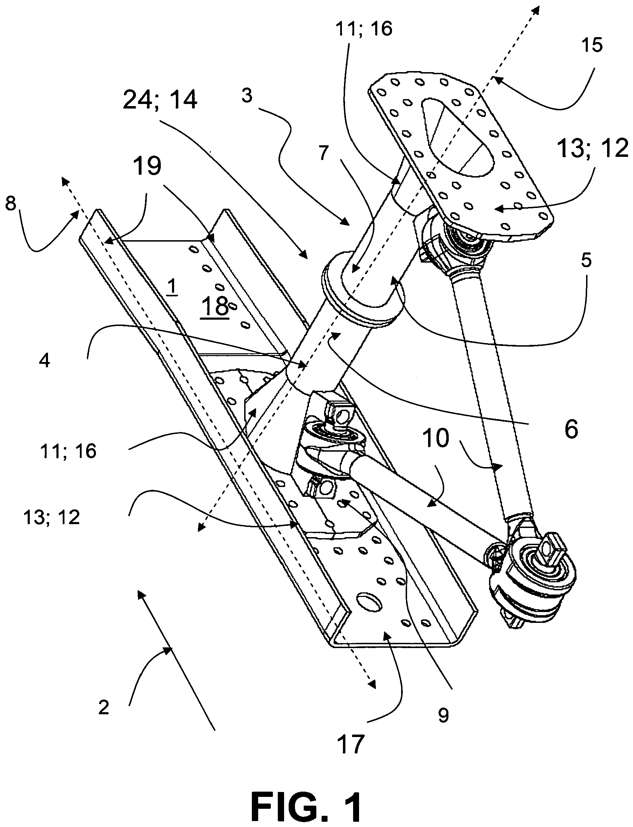

Fig. 1 zeigt in schematischer Darstellung den erfindungsgemäßen Querträger 3 mit seinen zwei Querträgerteilen 4; 5. Der Querträger 3 ist in Fahrtrichtung 2 gesehen mit seinem linken Ende am Längsträger 1 befestigt. Zur Befestigung des Querträgers 3 am Längsträger 1 verfügt das Querträgerteil 4; 5 über einen Anschlussflansch 12. In der Darstellung der Fig. 1 ist der Einfachheit halber der rechte Längsträger 1 nicht gezeigt. Der Anschlussflansch 12 weist ein Lochbild 13 auf, dessen Bohrungen dem Durchtritt von Verbindungsschrauben oder Nieten dienen. Im Stoßbereich 24 liegen die Flansche 6; 7 parallel aneinander an. Relativ zur Längsachse 8 des Längsträgers 1 sind die Flansche 6; 7 dabei schräg angeordnet. Die Querträgerteile 4; 5 fluchten im verbauten Zustand 14 miteinander entlang der Längsachse 15 des Querträgers 3. An den von den Flanschen 6; 7 abgewandten Enden des Querträgers 3 sind im Übergangsbereich 11 zu den jeweiligen Anschlussflanschen 12 radiale Erweiterungen 16 erkennbar. Die radiale Erweiterung 16 weist dabei im Bereich des Querträgers 3 einen geringeren Durchmesser auf als im Bereich des Anschlussflansches 12. Im Bereich der radialen Erweiterung 16 sind im jeweiligen Übergangsbereich 11 miteinander korrespondierende Lagerböcke 9 angeordnet, die der Befestigung eines Lenkungselements 10 (hier: Dreieckslenker) dienen. Der Längsträger 1 weist dabei eine U-Form 17 auf, die aus dem Steg 18 und den beiden Schultern 19 gebildet wird.

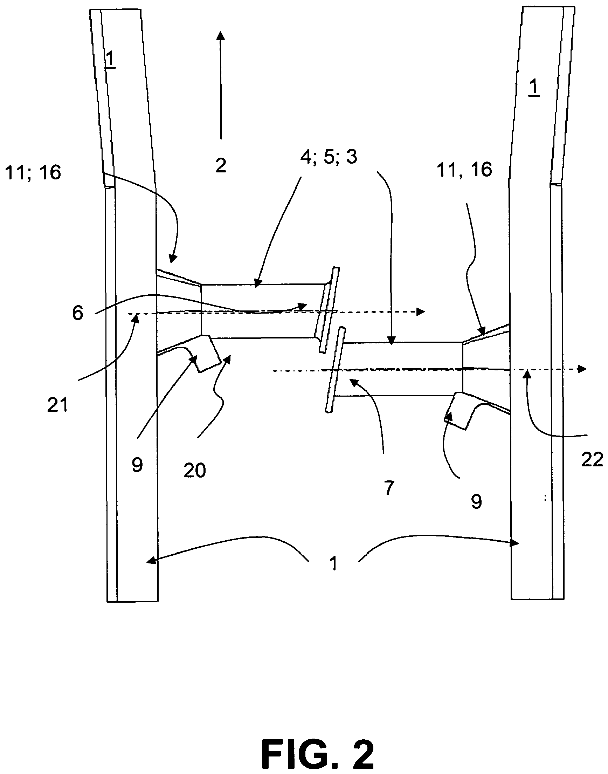

Fig. 2 zeigt die beiden Querträgerteile 4; 5 des Querträgers 3 zwischen den Längsträgern 1 des Fahrgestellrahmens des Nutzfahrzeugs. Die beiden Querträgerteile 4; 5 befinden sich im geöffneten Zustand. Sie sind in bzw. entgegen der Fahrtrichtung 2 auseinander geschoben, sodass die Flansche 6; 7 der Querträgerteile 4; 5 gegen einander parallel verschoben sind. Die Längsachsen 21; 22 der Querträgerteile 4; 5 verlaufen dabei achsparallel zueinander. In den jeweiligen Übergangsbereichen 11 der beiden Flansche 6; 7 zu den jeweiligen Längsträgern 1 sind die radialen Erweiterungen 16 der Querträgerteile 4; 5 erkennbar. Jede radiale Erweiterung 16 der Querträgerteile 4; 5 weist je einen Lagerbock 9 auf, der der Befestigung eines Lenkungselementes 10 (nicht gezeigt) dient.

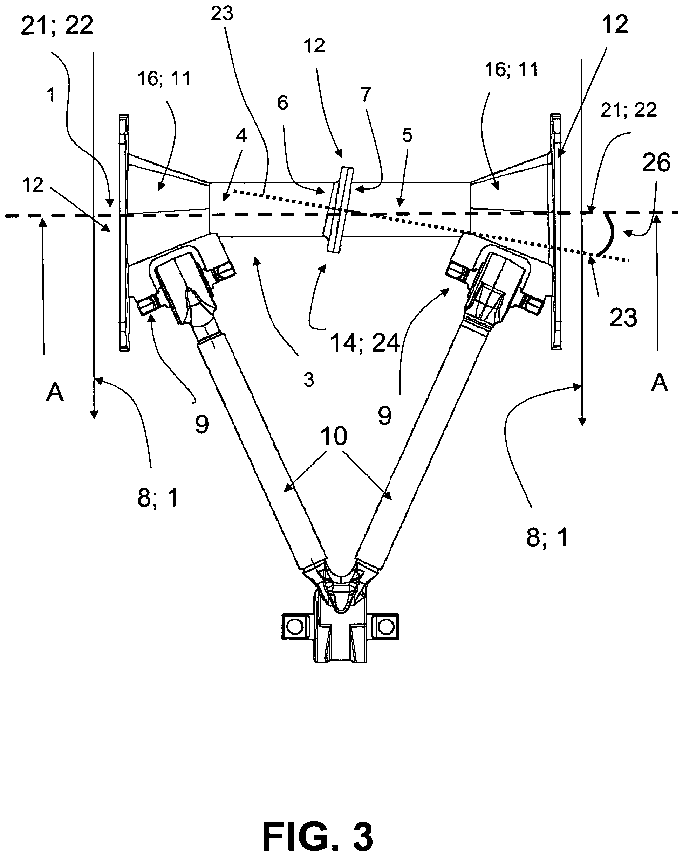

Fig. 3 zeigt in Draufsicht die beiden Querträgerteile 4; 5 des Querträgers 3 in verbautem Zustand 14. An ihren äußeren Enden weisen die Querträgerteile 4; 5 die radialen Erweiterungen 16 auf, die in den Übergangsbereichen 11 zu den jeweiligen Anschlussflanschen 12 radial erweitert sind. Aus der Draufsicht sind die beiden Flansche 6; 7 der Querträgerteile 4; 5 zu erkennen, die im Stoßbereich 24 parallel aneinander anliegen und relativ zur Längsachse 8 des Längsträgers 1 schräg angeordnet sind. Senkrecht und rechtwinklig zu den Flanschen 6; 7 der Querträgerteile 4; 5 verläuft in der Fig. 3 die gedachte Gerade 23. Aufgrund der Schrägstellung der Flansche 6; 7 der Querträgerteile 4; 5 zur Längsachse 8 des Längsträgers 1 verläuft die gedachte Gerade 23 in einem Winkel 26 zu den Längsachsen 21; 22 der Querträgerteile 4; 5. Mit Ziffer 9 sind die Lagerböcke bezeichnet, die in den jeweiligen Übergangsbereichen 11 an den Querträgerteilen 4; 5 befestigt sind und der Anbindung der Lenkungselemente 10 dienen.

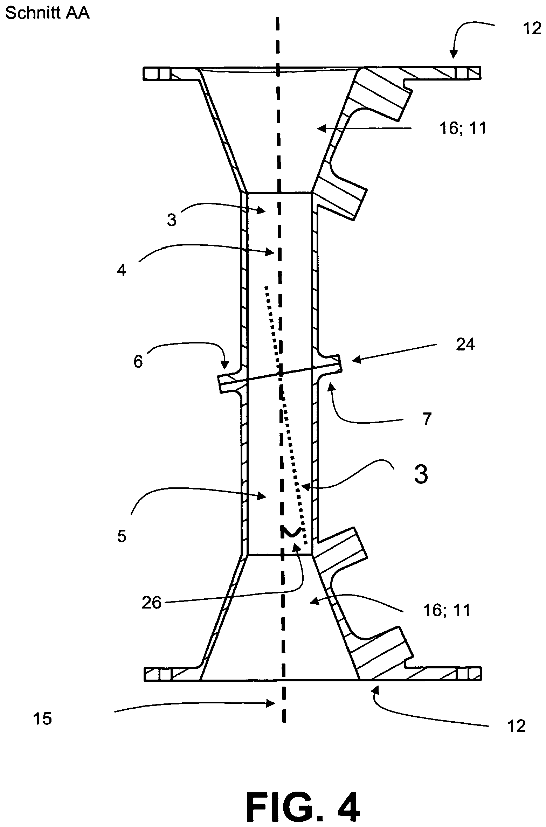

Fig. 4 zeigt den Querträger 3 seitlich geschnitten als Schnitt A-A entsprechend der Fig. 3. Die beiden Querträgerteile sind mit den Bezugsziffern 4; 5 bezeichnet und fluchten miteinander entlang der Längsachse 15. Die Querträgerteile 4; 5 stoßen mit ihren Flanschen 6; 7 im Stoßbereich 24 aneinander an. Senkrecht und rechtwinklig zu den Flanschen 6; 7 der Querträgerteile 4; 5 verläuft in der Fig. 4 die gedachte Gerade 23. Die Gerade 23 verläuft in einem Winkel 26 zur Längsachse 15 des Querträgers 3. Die beiden Querträgerteile 4; 5 umfassen je eine radiale Erweiterung 16 in den Übergangsbereichen 11 zu den Anschlussflanschen 12. Die beiden Übergangsbereiche 11 weisen in Fig. 4 jeweils in etwa die Form eines Stumpfkegels auf, wobei der Durchmesser auf der im Stoßbereich 24 zugewandten Seite geringer ist als auf der Seite der Anschlussflansche 12.

### Bezugsziffernliste:

- 1: Längsträger
- 2: Fahrtrichtung
- 3: Querträger
- 4: Querträgerteil
- 5: Querträgerteil
- 6: Flansch
- 7: Flansch
- 8: Längsachse des Längsträgers
- 9: Lagerbock
- 10: Lenkungselement
- 11: Übergangsbereich
- 12: Anschlussflansch
- 13: Lochbild
- 14: verbauter Zustand
- 15: Längsachse des Querträgers
- 16: radiale Erweiterung
- 17: U-Form
- 18: Steg
- 19: Schulter
- 20: geöffneter Zustand
- 21: Längsachse der Flansche 6; 7
- 22: Längsachse der Flansche 6; 7
- 23: gedachte Gerade
- 24: Stoßbereich
- 26: Winkel

## Patentansprüche

1. Nutzfahrzeug mit einem Fahrgestellrahmen, zwischen dessen Längsträgern (1) quer zur Fahrtrichtung (2) wenigstens ein Querträger (3) lösbar befestigt ist, **dadurch gekennzeichnet, dass** der Querträger (3) zur Erleichterung der Montage oder der Demontage aus zwei axial aneinander anstoßenden Querträgerteilen (4; 5) besteht, die in Fahrtrichtung (2) gesehen gegeneinander verschiebbar sind und die zur gegenseitigen Verbindung je einen Flansch (6; 7) aufweisen, wobei die Flansche (6; 7) im Stoßbereich (24) parallel aneinander anliegen und relativ zur Längsachse (8) des Längsträgers (1) schräg angeordnet sind.

2. Nutzfahrzeug nach Anspruch 1, **dadurch gekennzeichnet, dass** an den jeweils außen liegenden Querträgerteilen (4, 5) miteinander korrespondierende Lagerböcke (9) angeordnet sind, die der Befestigung von Lenkungselementen (10) dienen.

3. Nutzfahrzeug nach Anspruch 1, **dadurch gekennzeichnet, dass** der Querträgerteil (4; 5) im Übergangsbereich (11) zu einem Anschlussflansch (12), der der Befestigung am Längsträger (1) dient, radial erweitert ist.

4. Nutzfahrzeug nach den Ansprüchen 2 und 3, **dadurch gekennzeichnet, dass** an den jeweiligen Übergangsbereichen (11) miteinander korrespondierende Lagerböcke (9) angeordnet sind, die der Befestigung von Lenkungselementen (10) dienen.

## Claims

1. Utility vehicle with a chassis frame, between longitudinal members (1) of which at least one crossmember (3) is releaseably fastened transversely with respect to the direction of travel (2), **characterized in that**, in order to facilitate the installation or the removal, the crossmember (3) consists of two crossmember parts (4; 5) which butt axially against each other and are displaceable relative to each other, as seen in the direction of travel (2), and each have a flange (6; 7) for the mutual connection, wherein the flanges (6; 7) lie against each other in parallel in the abutment region (24) and are arranged obliquely relative to the longitudinal axis (8) of the longitudinal member (1).

2. Utility vehicle according to Claim 1, **characterized in that** bearing brackets (9) which correspond to one another and serve for fastening steering elements (10) are arranged on the respectively outer crossmember parts (4, 5).

3. Utility vehicle according to Claim 1, **characterized in that** the crossmember part (4; 5) is radially expanded in the transition region (11) to form a connecting flange (12) which serves for fastening to the longitudinal member (1).

4. Utility vehicle according to Claims 2 and 3, **characterized in that** bearing brackets (9) which correspond to one another and serve for fastening steering elements (10) are arranged on the respective transition regions (11).

## Revendications

1. Véhicule utilitaire comprenant un cadre de châssis entre les longerons (1) duquel est fixée de manière détachable au moins une traverse (3) transversalement à la direction de conduite (2), **caractérisé en ce que** la traverse (3), pour faciliter le montage ou le démontage, se compose de deux parties de traverse (4 ; 5) butant axialement l'une contre l'autre qui, vu dans la direction de conduite (2), peuvent être déplacées l'une par rapport à l'autre et qui présentent chacune une bride (6 ; 7) pour leur raccordement mutuel, les brides (6 ; 7) s'appliquant l'une contre l'autre parallèlement dans la région d'aboutement (24) et étant disposées obliquement par rapport à l'axe longitudinal (8) du longeron (1).

2. Véhicule utilitaire selon la revendication 1, **caractérisé en ce que** des paliers (9) se correspondant mutuellement sont disposés au niveau des parties de traverse (4, 5) situées à chaque fois à l'extérieur, lesquels paliers servent à la fixation d'éléments de direction (10).

3. Véhicule utilitaire selon la revendication 1, **caractérisé en ce que** la partie de traverse (4 ; 5) est élargie radialement dans la région de transition (11) à une bride de raccordement (12) qui sert à la fixation au longeron (1).

4. Véhicule utilitaire selon les revendications 2 et 3, **caractérisé en ce que** des paliers (9) se correspondant mutuellement sont disposés au niveau des régions de transition respectives (11), lesquels paliers servent à la fixation d'éléments de direction (10).
